# EUROPEAN PATENT SPECIFICATION

(11) **EP 4 613 558 B1**
(45) Date of publication and mention of the grant of the patent: **09.12.2026**
(21) Application number: 25191765.4
(22) Date of filing: 23.06.2020
(51) Int. Cl.: B60Q 1/24

(54) **SYSTEMS AND METHODS FOR SEARCH AND RESCUE LIGHT CONTROL FOR A ROTORCRAFT**
SYSTEME UND VERFAHREN ZUR SUCH- UND RETTUNGSLICHTSTEUERUNG FÜR EIN DREHFLÜGELFLUGZEUG
SYSTÈMES ET PROCÉDÉS DE COMMANDE DE LUMIÈRE DE RECHERCHE ET DE SECOURS POUR UN GIRAVION

(30) Priority: 17.07.2019 US 201916514479
(43) Date of publication of application: 10.09.2025
(62) Document number(s) of the earlier application(s) in accordance with Art. 76 EPC: 20181793.9 / 3 766 735
(73) Proprietor: HONEYWELL INTERNATIONAL INC., Charlotte, NC 28202 (US)
(72) Inventor: DAS, Shouvik, Charlotte, 28202 (US); SETHURAMAN, Deepthi, Charlotte, 28202 (US); SRINIVASULU, Anupama, Charlotte, 28202 (US)
(74) Representative: Ingrassia, Fisher & Lorenz UK Ltd.

(56) References cited:
- EP-A2- 1 683 720
- US-A1- 2007 091 609

## Description

### TECHNICAL FIELD

The technical field generally relates to navigational aids, and more particularly relates to systems and methods for search and rescue light control for a rotorcraft.

### BACKGROUND

Rotorcraft Searchlights are illumination apparatus mounted under the belly or chin of a rotorcraft. They generate a beam of light that may be used to illuminate a point of interest on the ground while the rotorcraft is in the air. When the direction/location of the searchlight beam of light is controlled, it may facilitate operations of search and rescue missions. Some conventional searchlight configurations are rigidly mounted, in which case, the rotorcraft itself must maneuver in order to re-orient and control the direction/location of the searchlight beam of light. Other conventional searchlight configurations provide pan and tilt control to maneuver the direction/location of the searchlight beam of light on the ground, independent of the rotorcraft movement.

During a Search and Rescue (SAR) mission, the onus is generally on the pilot to control the searchlight beam of light and/or fly the rotorcraft to follow a predefined SAR pattern. These missions are dynamic and can be very technically difficult. For example, the rotorcraft may have to fly close to the terrain, in high crosswinds, etc. Maintaining the rotorcraft attitude while controlling the searchlight beam of light is cognitively demanding.

Moreover, maneuvering the direction/location of the searchlight beam of light on the ground is difficult under normal circumstances, even with searchlight configurations that provide pan and tilt control. This is because, in order to move from a point A to a point B on the ground, an operator generally must make multiple sequential movements, each being a combination of pan and tilt.

Accordingly, it is desirable to provide pilots with systems and methods that improve their control over the search and rescue lights, and that are simpler to use during these missions, easing the cognitive demand. The following disclosure provides these technological enhancements, in addition to addressing related issues. Documents cited during prosecution include US 2007/091609 A1 and EP 1 683 720 B1.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

Aspects and preferred embodiments of the invention are defined in the appended claims. Provided is a system to control a search and rescue (SAR) light on a rotorcraft, the SAR light configured to project a beam of light along a beam axis. The system includes: a pan control motor configured to cause the beam axis to pan responsive to a pan command; a tilt control motor configured to cause the beam axis to tilt responsive to a tilt command; a navigation system providing a real-time rotorcraft state, including a latitude, a longitude, and an orientation; a source of a cartesian pattern configured to supply a cartesian input point; a controller operationally coupled to the navigation system and the source of a cartesian pattern, the controller having a processor programmed to: receive the cartesian input point; determine an initial light head orientation as a function of the real-time rotorcraft state; generate a pan command and a tilt command as a function of the initial light head orientation and the cartesian input point; and transmit the pan command to the pan control motor and the tilt command to the tilt control motor; and a pan-tilt-zoom (PTZ) camera configured to slave with the beam axis and to continuously have a field of view centered on the beam axis, the PTZ camera configured to capture a video stream and transmit it.

A method for controlling a Search and rescue (SAR) light on a rotorcraft, the SAR light configured to project a beam of light along a beam axis, is provided. The method includes: at a controller having a processor programmed with a SAR program, performing the operations of: receiving real-time rotorcraft state data; receiving a cartesian input point; determining an initial light head orientation as a function of the real-time rotorcraft state; calculating a delta-orientation for the SAR light; generating a pan command and a tilt command as a function of delta-orientation for the SAR light; and transmitting the pan command and the tilt command; at a pan control motor, causing the SAR light to pan responsive to the pan command; at a tilt control motor, causing the SAR light to tilt responsive to the tilt command; and at a pan-tilt-zoom (PTZ) camera configured to slave with the beam axis and to continuously have a field of view centered on the beam axis, capture a video stream and transmit it.

Also provided is a system to control a search and rescue (SAR) light on a rotorcraft, the SAR light configured to project a beam of light along a beam axis. The system includes: a pan control motor configured to cause the beam axis to pan responsive to a pan command; a tilt control motor configured to cause the beam axis to tilt responsive to a tilt command; a navigation system providing a real-time rotorcraft state, including a latitude, a longitude, and an orientation; a source of a cartesian pattern including a plurality of cartesian input points in a sequence, the source of the cartesian pattern being selectable from among an input device, a flight management system, a memory device, and an external source; a controller operationally coupled to the navigation system and the source of cartesian pattern, the controller having a processor to: receive the cartesian pattern; and for each cartesian input point in the sequence defining the cartesian pattern, determine an initial light head orientation as a function of the real-time rotorcraft state; generate a pan command and a tilt command as a function of the initial light head orientation and the cartesian input point; transmit the pan command to the pan control motor and the tilt command to the tilt control motor; and identify a delta-range; and a pan-tilt-zoom (PTZ) camera configured to slave with the beam axis and to continuously have a field of view centered on the beam axis, the PTZ camera configured to: capture a video stream and transmit it; zoom in on the field of view of the PTZ camera when the delta-range is positive; and zoom out on the field of view of the PTZ camera when the delta-range is negative.

Furthermore, other desirable features and characteristics of the system and method will become apparent from the subsequent detailed description and the appended claims, taken in conjunction with the accompanying drawings and the preceding background.

### BRIEF DESCRIPTION OF THE DRAWINGS

The present application will hereinafter be described in conjunction with the following drawing figures, wherein like numerals denote like elements, and:
FIG. 1 is a block diagram of a system for search and rescue light control for a rotorcraft, in accordance with an exemplary embodiment;
FIG. 2 is an image showing the conversion between a spherical coordinate system and a cartesian coordinate system;
FIG. 3 is an image showing the difficulty of controlling a light beam to move along a straight-line using pan and tilt controls;
FIGS. 4A and 4B are an example of a collective stick grip, as may be used to provide manual input, accordance with an exemplary embodiment;
FIGS. 5A-5E illustrate a variety of search and rescue patterns for implementing in a cartesian coordinate system, accordance with an exemplary embodiment; and
FIGS. 6-7 depict a method for search and rescue light control for a rotorcraft, in accordance with an exemplary embodiment.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Thus, any embodiment described herein as "exemplary" is not necessarily to be construed as preferred or advantageous over other embodiments. The embodiments described herein are exemplary embodiments provided to enable persons skilled in the art to make or use the invention and not to limit the scope of the invention that is defined by the claims. Furthermore, there is no intention to be bound by any expressed or implied theory presented in the preceding technical field, background, summary, or the following detailed description.

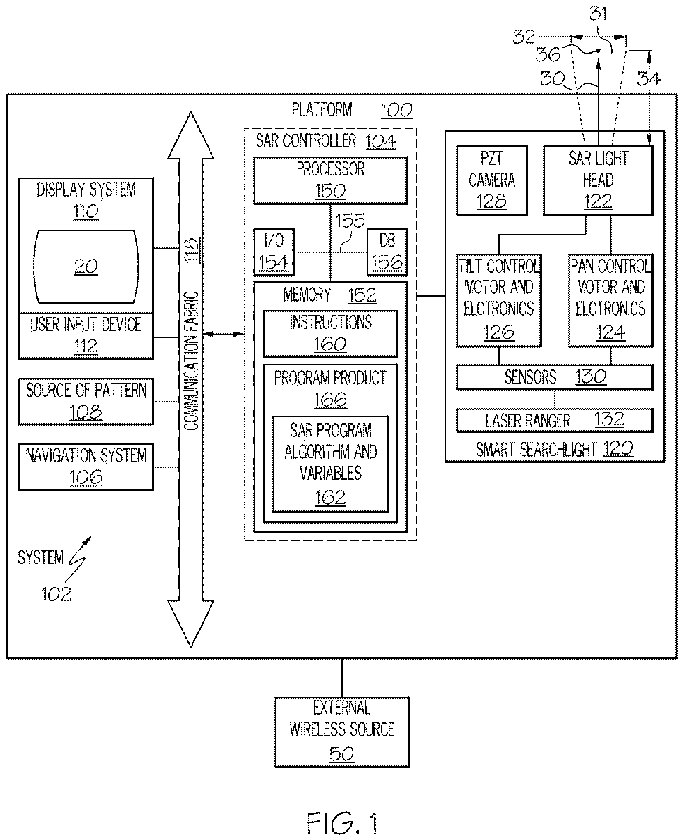

As used herein, control of a search and rescue (SAR) light (i.e., a device or apparatus that projects a searchlight beam of light) includes the desired control of the searchlight beam of light. As mentioned, SAR operations are cognitively and technically difficult tasks. The challenge of a SAR operation is further aggravated in situations in which the search area is not easy for the rotorcraft to maneuver in. A technical problem is presented in improving the tools and methods for controlling a SAR light so that a SAR operation can be completed efficiently and safely. Current navigational aids that are used as a solution to this technical problem have drawbacks, such as a reliance on spherical input coordinates to control the SAR light. The present invention introduces a novel technical solution and approach to this problem. In an embodiment, a system for SAR light control for a rotorcraft (FIG. 1, system **102)** is provided. Core functionality provided by this disclosure includes:
- Systems and methods that increase the likelihood that a rotorcraft can hover at one place and from there move the searchlight beam of light in accordance with a prescribed SAR pattern. This increases safety and completion of the prescribed SAR.
- Systems and methods that can also be extended to all multi-rotors/rotorcrafts having SAR lights and cameras.
- Systems and methods that give a lot of flexibility in searching and capturing images in a predefined pattern (such as the SAR pattern), so that the area of interest is well covered.

The proposed system for SAR light control for a rotorcraft **102** is an easy augmentation for any rotorcraft equipped with a smart searchlight (FIG. **1****, 120)** and does not require any special or additional instrumentation and equipage. The figures and descriptions below provide more detail.

Turning now to FIG. 1, exemplary embodiments of the system for SAR light control for a rotorcraft **102** (also referred to herein as "system" **102)** is generally associated with a mobile platform **100.** In various embodiments, the mobile platform **100** is a rotorcraft, and is referred to as rotorcraft **100.** The system **102** provides a technical solution in the form of a search and rescue controller (FIG. 1, controller **104,** also referred to herein as a SAR controller, and as a control module) embodying novel rules and parameters. In some embodiments, the controller **104** may be integrated within a preexisting mobile platform management system, avionics system, cockpit display system (CDS), flight controls system (FCS), or rotorcraft flight management system (FMS). Although the controller **104** is shown as an independent functional block, onboard the rotorcraft **100,** in other embodiments, it may exist in an electronic flight bag (EFB) or portable electronic device (PED), such as a tablet, cellular phone, or the like. In embodiments in which the controller is within an EFB or a PED, a display system **110** and a user input device **112** may also be part of the EFB or PED.

The controller **104** may be operationally coupled to any combination of the following rotorcraft systems: a communication system and fabric **118;** a rotorcraft inertial navigation system **106;** a source of a cartesian pattern **108;** a display system **110;** a user input device **112;** and, a smart searchlight apparatus **120.** In some embodiments, the controller **104** is also operationally coupled to an external source **50** that communicates wirelessly with the controller **104.** The functions of these rotorcraft systems, and their interaction, are described in more detail below.

In various embodiments, the smart searchlight apparatus **120** comprises a SAR light, called light head **122,** that projects a three-dimensional beam of light **31** along a beam axis **30** to land on the ground (or a surface) at beam axis touchdown **36.** The beam of light **31** generally surrounds the beam axis and extends uniformly therefrom in a radial direction. The orientation of the light head **122** and resulting beam axis **30,** with respect to the rotorcraft **100,** is controlled by one or both of a pan control motor **124** and electronics, and a tilt control motor **126** and electronics. Sensors **130** may detect orientation and configuration status of the light head **122** and convert this status information into electrical signals for processing. A laser ranger **132** is configured to determine the slant range **34** (shortened to range **34)** from the light head **122** to the beam axis touchdown **36.** Searchlight data collectively refers to range data and sensor data.

In some embodiments, a real-time rotorcraft state is described by state data generated by the rotorcraft inertial navigation system **106.** The real-time rotorcraft state may therefore be described by any of: an instantaneous location (e.g., the latitude, longitude, orientation), an instantaneous heading (i.e., the direction the rotorcraft is traveling in relative to some reference), a flight path angle, a vertical speed, a ground speed, an instantaneous altitude (or height above ground level), and a current phase of flight of the rotorcraft **100.** As used herein, "real-time" is interchangeable with current and instantaneous. The rotorcraft inertial navigation system **106** may be realized as including a global positioning system (GPS), inertial reference system (IRS), or a radio-based navigation system (e.g., VHF omni-directional radio range (VOR) or long-range aid to navigation (LORAN)), and may include one or more navigational radios or other sensors suitably configured to support operation of the FMS, as will be appreciated in the art. In various embodiments, the data referred to herein as the real-time rotorcraft state data may be referred to as navigation data. The real-time rotorcraft state data is made available, generally by way of the communication system and fabric **118,** so other components, such as the controller **104** and the display system **110,** may further process and/or handle the rotorcraft state data.

In various embodiments, the communications system and fabric **118** is configured to support instantaneous (i.e., real time or current) communications between on-board systems, the controller **104,** and one or more external data source(s) **50.** As a functional block, the communications system and fabric **118** may represent one or more transmitters, receivers, and the supporting communications hardware and software required for components of the system **102** to communicate as described herein. In various embodiments, the communications system and fabric **118** may have additional communications not directly relied upon herein, such as bidirectional pilot-to-ATC (air traffic control) communications via a datalink, and any other suitable radio communication system that supports communications between the rotorcraft **100** and various external source(s).

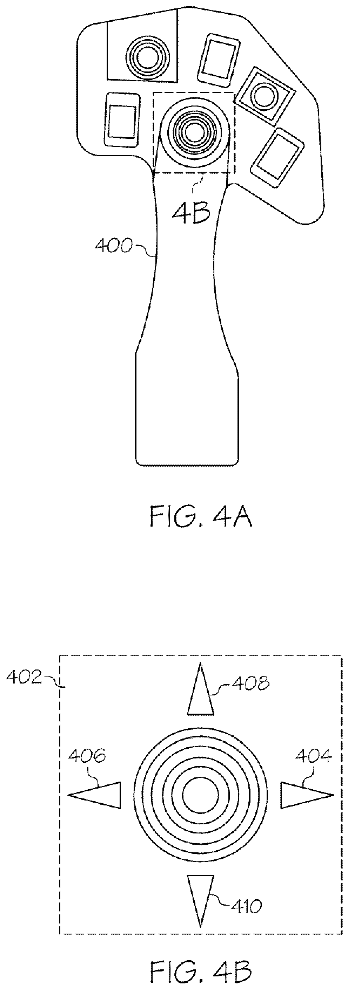

The user input device **112** and the controller **104** are cooperatively configured to allow a user (e.g., a pilot, co-pilot, or crew member) to interact with display devices in the display system **110** and/or other elements of the system **102,** as described in greater detail below. Depending on the embodiment, the user input device **112** may be realized as a cursor control device (CCD), keypad, touchpad, keyboard, mouse, touch panel (or touchscreen), joystick, knob, line select key, voice controller, gesture controller, or another suitable device adapted to receive input from a user. As shown in FIG. 4, a common user input device **112** for searchlight control is called a collective stick grip **400,** or thrust grip, having a hat switch **402.** The hat switch can be manipulated in four directions (for example, right **404,** left **406,** forward **408,** and reverse **410)** sequentially, generating cartesian inputs that can be used by the controller **104** as described herein.

When the user input device **112** is configured as a touchpad or touchscreen, it may be integrated with the display system **110.** As used herein, the user input device **112** may be used by a pilot to communicate with external sources, to modify or upload the program product **166,** etc. In various embodiments, the display system **110** and user input device **112** are onboard the rotorcraft **100** and are also operationally coupled to the communication system and fabric **118.** In some embodiments, the controller **104,** user input device **112,** and display system **110** are configured as a control display unit (CDU).

The controller **104** may be said to display various images and selectable options described herein. In practice, this may mean that the controller **104** generates display commands, and, and the display system **110,** responsive thereto, causes the display device **20** to render thereon the various graphical user interface elements, tables, icons, alerts, menus, buttons, and pictorial images, as described herein. Display methods include various types of computer-generated symbols, text, and graphic information representing, for example, pitch, heading, flight path, airspeed, altitude, runway information, waypoints, targets, obstacles, terrain, and required navigation performance (RNP) data in an integrated, multi-color or monochrome form. Display methods also include various formatting techniques for visually distinguishing objects and routes from among other similar objects and routes.

The display system **110** is configured to continuously receive and process the display commands from the controller **104.** In various embodiments described herein, the display system **110** includes a synthetic vision system (SVS). In exemplary embodiments, the display device **20** is realized on one or more electronic display devices, such as a multi-function display (MFD) or a multi-function control display unit (MCDU), configured as any combination of: a head up display (HUD), an alphanumeric display, a vertical situation display (VSD) and a lateral navigation display (ND).

A pan-tilt-zoom (PTZ) camera **128** is configured to slave with the light head **122;** specifically, PTZ camera **128** is configured to slave (i.e., orient concurrently and continuously) with the beam axis **30,** and to have a field of view FOV **32** that is centered on the beam axis **30.** The PTZ camera **128** is responsive to controller **104** commands for when to capture a video stream and when to cease capturing a video stream. The PTZ camera **128** is configured to capture the video stream and transmit it to the display system **110.** It is understood that the PTZ camera **128** capably functions at the ranges **34** of which the smart searchlight apparatus **120** is used.

The controller **104** performs the functions of the system for SAR light control for a rotorcraft **102.** As used herein, the term "controller" may be interchanged with the term "module;" each refers to any means for facilitating communications and/or interaction between the elements of the system **102** and performing additional processes, tasks and/or functions to support operation of the system **102,** as described herein. In various embodiments, the controller **104** may be any hardware, software, firmware, electronic control component, processing logic, and/or processor device, individually or in any combination. Depending on the embodiment, the controller **104** may be implemented or realized with a general purpose processor (shared, dedicated, or group) controller, microprocessor, or microcontroller, and memory that executes one or more software or firmware programs; a content addressable memory; a digital signal processor; an application specific integrated circuit (ASIC), a field programmable gate array (FPGA); any suitable programmable logic device; combinational logic circuit including discrete gates or transistor logic; discrete hardware components and memory devices; and/or any combination thereof, designed to perform the functions described herein.

Accordingly, in FIG. 1, an embodiment of the controller **104** is depicted as a computer system comprising a processor **150** and a memory **152.** The processor **150** may comprise any type of processor or multiple processors, single integrated circuits such as a microprocessor, or any suitable number of integrated circuit devices and/or circuit boards working in cooperation to carry out the described operations, tasks, and functions by manipulating electrical signals representing data bits at memory locations in the system memory, as well as other processing of signals. The memory **152** may comprise RAM memory, ROM memory, flash memory, registers, a hard disk, or another suitable non-transitory short or long-term storage media capable of storing computer-executable programming instructions or other data for execution. The memory **152** may be located on and/or co-located on the same computer chip as the processor **150.** Generally, the memory **152** maintains data bits and may be utilized by the processor **150** as storage and/or a scratch pad during operation. Specifically, the memory **152** stores instructions and applications **160.** Information in the memory **152** may be organized and/or imported from an external source during an initialization step of a process; it may also be programmed via a user input device **112.** During operation, the processor **150** loads and executes one or more programs, algorithms and rules embodied as instructions and applications **160** contained within the memory **152** and, as such, controls the general operation of the controller **104** as well as the system **102.**

The novel search and rescue (SAR) program **162** includes rules and instructions. The processor **150** loads the SAR program **162** (thereby being programmed with the SAR program **162).** When the processor **150** executes the SAR program **162,** this causes the controller **104** to perform the functions, techniques, and processing tasks associated with the operation of the system **102.** The SAR program **162** directs the processing of searchlight data with real time navigation data and cartesian input (e.g., loci) to determine differences/deviations between past, current, and intended next positions, orientations and ranges, as described hereinbelow. Novel program **162** and associated stored variables **164** may be stored in a functional form on computer readable media, for example, as depicted, in memory **152.** While the depicted exemplary embodiment of the controller **104** is described in the context of a fully functioning computer system, those skilled in the art will recognize that the mechanisms of the present disclosure are capable of being distributed as a program product **166.**

As a program product **166,** one or more types of non-transitory computer-readable signal bearing media may be used to store and distribute the SAR program **162,** such as a non-transitory computer readable medium bearing the SAR program **162** and containing therein additional computer instructions for causing a computer processor (such as the processor **150)** to load and execute the SAR program **162.** Such a program product **166** may take a variety of forms, and the present disclosure applies equally regardless of the type of computer-readable signal bearing media used to carry out the distribution. Examples of signal bearing media include: recordable media such as floppy disks, hard drives, memory cards and optical disks, and transmission media such as digital and analog communication links. It will be appreciated that cloud-based storage and/or other techniques may also be utilized as memory **152** and as program product time-based viewing of clearance requests in certain embodiments.

In various embodiments, the processor/memory unit of the controller **104** may be communicatively coupled (via a bus **155)** to an input/output (I/O) interface **154,** and a database **156.** The bus **155** serves to transmit programs, data, status and other information or signals between the various components of the controller **104.** The bus **155** can be any suitable physical or logical means of connecting computer systems and components. This includes, but is not limited to, direct hard-wired connections, fiber optics, infrared and wireless bus technologies.

The I/O interface **154** enables intra controller **104** communication, as well as communications between the controller **104** and other system **102** components, and between the controller **104** and the external data sources via the communication system and fabric **118.** The I/O interface **154** may include one or more network interfaces and can be implemented using any suitable method and apparatus. In various embodiments, the I/O interface **154** is configured to support communication from an external system driver and/or another computer system. In one embodiment, the I/O interface **154** is integrated with the communication system and fabric **118** and obtains data from external data source(s) directly. Also, in various embodiments, the I/O interface **154** may support communication with technicians, and/or one or more storage interfaces for direct connection to storage apparatuses, such as the database **156.**

In some embodiments, the database **156** is part of the memory **152.** In various embodiments, the database **156** is integrated, either within the controller **104** or external to it. Accordingly, in some embodiments, cartesian patterns and/or terrain maps are pre-loaded and internal to the controller **104.**

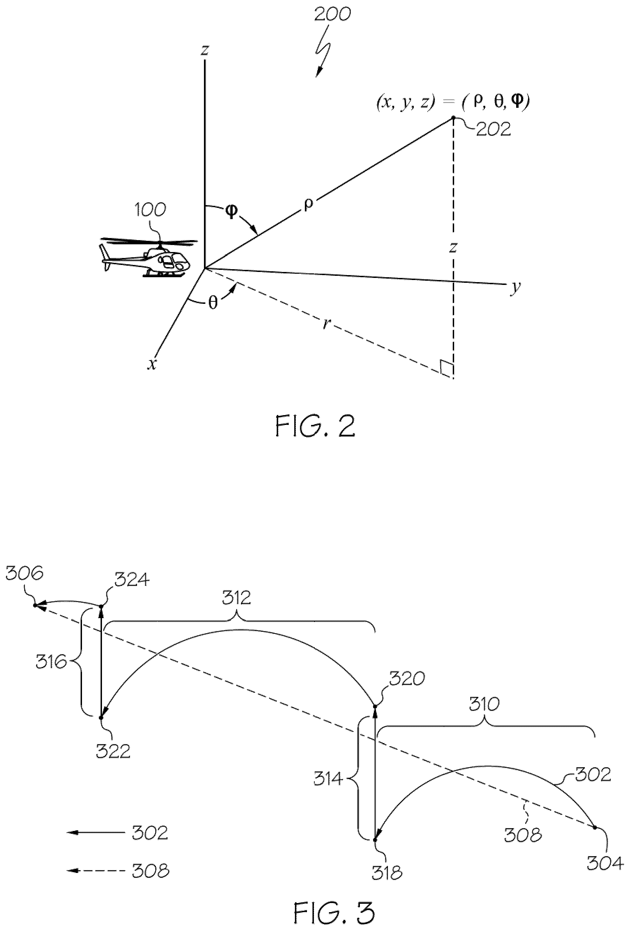

Turning now to the three-dimensional image **200** indicated in FIG. 2, rotorcraft **100** is shown at the origin of a cartesian coordinate system, with a beam of light projecting out to a point **202.** Traditional searchlights with independent pan and tilt control are generally controlled in spherical coordinates. Using spherical coordinates, the orientation of the beam of light projecting out to point **202,** with respect to the earth, is described in terms elevation (θ) (measured from the X axis) and azimuth (ψ) (measured from the Z axis). The elevation (θ) and azimuth (ψ) are controlled by pan and tilt angles. Further, to describe the location of point **202,** the slant range ρ is used. Therefore, the location of point **202** defined in the cartesian coordinate system as (x, y, z), can be translated to the 3-tuple {ρ, θ, ψ} in the spherical coordinate system.

The task of tracing out a straight-line using pan and tilt is much more challenging, particularly when a searchlight light head **122** is to be panned with a non-zero tilt, as shown in FIG. 3. In FIG. 3, the ideal locus **308** is a dashed straight-line from A **304** to B **306.** The ideal locus **308** represents a desired path made by the beam axis touchdown **36** (i.e., the point at which the beam axis intersects with the ground).

However, the actual locus **302** from a searchlight light head **122** panned with a non-zero tilt is parabolic, as shown with the heavy line from A **304** to B **306.** As can be seen with actual locus **302,** moving the beam axis touchdown **36** from A **304** to B **306** requires multiple sequential pan and tilt maneuvers. For example, moving from A **304** to B **306** involves a first pan **310** moving the beam axis touchdown from A **304** to A' **318.** A first tilt **314** moves the beam axis touchdown from A' to A" (point **320),** a second pan **312** moving the beam axis touchdown to A'" (point **322)** and a second tilt **316** moving the beam axis touchdown to A"" (point **324).** And so on. As can be seen with the actual locus **302,** the task of tracing out a straight-line from A **304** to B **306** (the ideal locus **308)** using pan and tilt is very inefficient and inaccurate.

As mentioned, the provided system **102** can (1) perform this task and achieve the desired locus; and, (2) can perform this task by receiving cartesian inputs. The SAR controller **104** receives cartesian inputs for slew commands (as used herein, the slew command collectively refers to the directional input commands, or commands to move the light head in a certain way) from the operator/pilot an interprets the cartesian inputs as requests to make straight lines on the ground; Concurrent with receiving the cartesian input, the system **102** simultaneously generates respective azimuth and elevation commands for controlling the light head **122** (and its beam axis **30)** in accordance with the cartesian input slew commands.

A cartesian pattern is a plurality of cartesian input points that are arranged in a unique sequence that defines the cartesian pattern. Accordingly, the source of a cartesian pattern **108** provides at least one cartesian input point to the controller **104.** In some embodiments, the source of a cartesian pattern **108** is a manual input device such as the stick or hat switch **402** shown in FIG. 4. Responsive to cartesian input sequentially provided, the controller **104** controls the light head and the pilot's experience is an improved human-machine experience, in that he is operating the searchlight controls in cartesian convention and having a resultant straight-line locus on the ground.

In the above example embodiment, the source of cartesian pattern **108** is a user input device, and the method of input of the cartesian pattern is one point at a time, sequentially. However, the system **102** is not just limited to manual input, nor is it limited to drawing straight lines. The system **102** is additionally capable of receiving a complete cartesian pattern (e.g., in bulk) comprised of a plurality of cartesian inputs having a specific sequential order, storing the complete cartesian pattern, and implementing the complete cartesian pattern, point by point, without further manual interaction.

In various embodiments, the source of a cartesian pattern **108** is selectable and flexible, such that the controller **104** can receive cartesian patterns from one or more of: a memory device **152,** a flight management system, and other on-board systems. In various embodiments, the source of a cartesian pattern **108** is also selectable and flexible, such that the controller **104** can receive cartesian patterns additionally from an external source **50,** which provides the cartesian pattern via a wireless connection. Most patterns that can be described in cartesian coordinates can be reproduced with the movement of the light head **122** by the SAR controller **104.**

In other embodiments, the source of a cartesian pattern **108** is a flight management system. In still other embodiments, the source of a cartesian pattern **108** is a wireless data link from an external source **50.** In various embodiments, the controller **104** is programmed to receive cartesian input points from all the above potential sources of a cartesian pattern **108.**

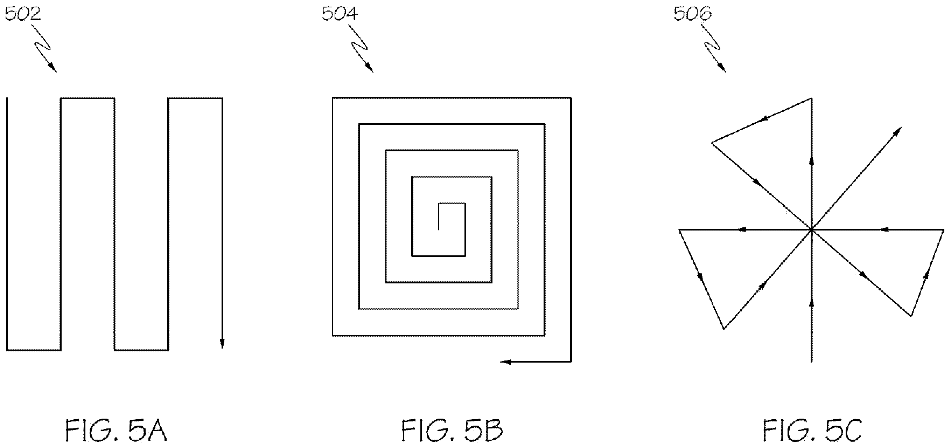

An advantage of being able to implement a cartesian pattern is that search and rescue patterns are often drawn in a cartesian system. As shown in FIGS. 5A-5E, there are many established search and rescue patterns, which may then be manually modified to scale to the area to be searched. In an XY plane, a creeping line **502** looks like a digital wave from left to right. An expanding square **504** begins with a small square and then wraps around itself in subsequent squares, each bigger and encompassing the previous ones. A sector **506** looks something like a pinwheel, in which the rotorcraft **100** crosses over a middle point repeatedly. Some three-dimensional search and rescue patterns include a contour search **508** and a plan view **510.** In each of the three-dimensional cartesian patterns, the rotorcraft begins at one altitude and sequentially descends in altitude.

In various embodiments, the complete predefined SAR patterns are stored for reference. They may be stored in the memory **152,** the database **156,** and/or be stored in the SAR program **162.** In various embodiments, the complete predefined SAR patterns are provided by the source of cartesian pattern **108.** In various embodiments, the complete predefined SAR patterns are provided by the external source **50.** Regardless of how the controller **104** obtains the complete predefined SAR patterns, the controller **104** may render a menu of available predefined SAR patterns for a pilot to select and activate in the cockpit. In various embodiments, the controller **104** commands the onboard display system **110** to render images of available SAR patterns and to provide the pilot with an ability to select a desired one from among them.

In various embodiments, the PTZ camera **128** is utilized during the search and rescue operation. The PTZ camera **128** is configured to slave with the beam axis **30.** As the rotorcraft **100** is stationary and the beam of light **31** scans the ground in accordance with the search pattern, the PTZ camera **128** can be utilized to capture video images of terrain and objects within the beam of light **31.** The controller **104** may then command the display system **110** to display the video images on the display system **110,** which improves the human-machine interface, and optimizes the efficiency of the search and rescue operation.

Notably, the SAR light control that is provided by the present invention offers a number of advantages over conventional search and rescue systems. First, the amount of time that a rotorcraft **100** can be stationary while executing a selected cartesian pattern can be maximized because the control of the light head 122 is no longer manual. In contrast, conventional search and rescue systems require the rotorcraft to fly and execute the pattern. As search and rescue operations are often performed in rugged territory, this increases safety. Next, the video images provided by the PTZ camera **128** as configured provide valuable SAR information.

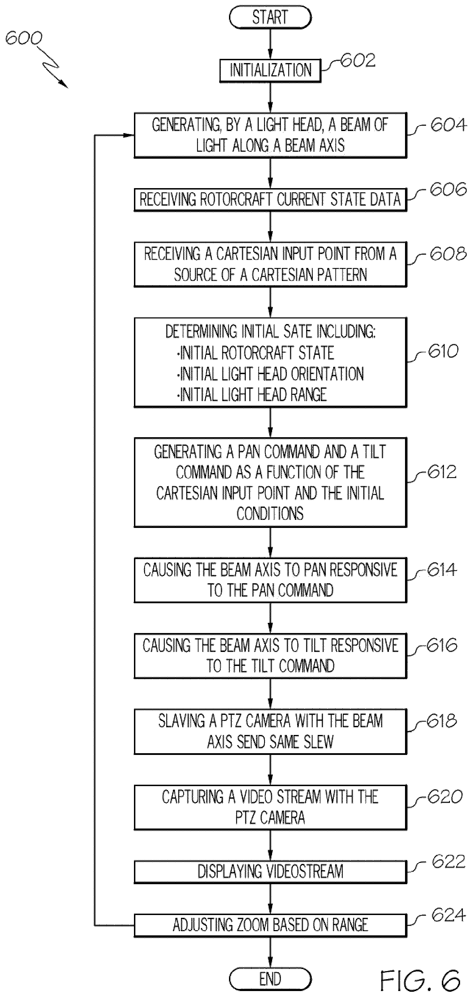

The system **102** may make its determinations and selections in accordance with a method such as method **600** of FIG. 6. With continued reference to FIGS. 1-5, a flow chart is provided for a method **600** for providing a system **102,** in accordance with various exemplary embodiments. Method **600** represents various embodiments of a method for adaptive clearance request prediction. For illustrative purposes, the following description of method **600** may refer to elements mentioned above in connection with FIG. 1. In practice, portions of method **600** may be performed by different components of the described system. It should be appreciated that method **600** may include any number of additional or alternative tasks, the tasks shown in FIG. 6 need not be performed in the illustrated order, and method **600** may be incorporated into a more comprehensive procedure or method having additional functionality not described in detail herein. Moreover, one or more of the tasks shown in FIG. 6 could be omitted from an embodiment of the method **600** if the intended overall functionality remains intact.

The method starts, and at **602** the controller **104** is initialized and the system **102** is in operation. Initialization may comprise uploading or updating instructions and applications **160,** program **162,** parameters, pre-programmed thresholds, lookup tables, and formatting instructions. Parameters may include, for example, configurable, pre-programmed range and orientation thresholds, parameters for setting up a user interface, and the various shapes, various colors and/or visually distinguishing techniques used for renderings on the display system **110.** In some embodiments, program **162** includes additional instructions and rules for rendering information differently based on type of display device in the display system **110.**

At **404,** rotorcraft state data is continuously obtained from the rotorcraft inertial navigation system **106.** At **604,** a light head **122** generates a beam of light **31** along a beam axis **30.** At **606** rotorcraft current state data is received. At **608** a cartesian input point is received from the source of a cartesian pattern **108.** As mentioned, in some embodiments, the cartesian pattern may be manually created, comprised of multiple cartesian input points entered sequentially. In an embodiment, the cartesian input point is provided via a collective stick grip **400.**

At **610,** responsive to receiving the cartesian input point, the method determines an initial state at a time tₒ. The initial state is used as a starting point for movement in the cartesian coordinate system. Therefore, the initial state includes, for time tₒ: rotorcraft state data, a light head orientation and a light head range. The initial light head orientation may be determined as a function of the real-time rotorcraft state, due to its location on the rotorcraft **100.**

At **612,** the controller **104** processes the initial state and the cartesian input point to identify a delta between them, which is a measure of how to move the light head **122** to get from its initial state to its desired state at the cartesian input point. One or more deltas can be created at **612.** For example, at **612,** the controller **104** calculates at least a delta-orientation for the light head **122** this measure defines how to turn a face of the light head **122** to direct the beam axis. In some embodiments, at **612,** the controller **104** calculates a delta-orientation and a delta-range, the delta-range is a measure of how to change the distance **34.** In various embodiments, responsive to a delta-range, the controller **104** commands the PTZ camera **128** to adjust, such as: to zoom in on the field of view of the PTZ camera **128** when the delta-range is positive; and to zoom out when the delta-range is negative. In various embodiments, the control module **104** keeps the field of view of the video stream constant by automatically changing the zoom value based on the delta-range.

With respect to directing the beam of light **31** and controlling the light head **122,** at **612,** the controller **104** generates a pan command and a tilt command as a function of the one or more deltas. At **614,** the pan control motor **124** causes the light head **122** (and beam axis **30)** to pan responsive to the pan command. At **616,** the tilt control motor **126** causes the light head **122** (and beam axis **30)** to tilt responsive to the tilt command. Data from the sensors **130** may be processed to confirm the desired pan and tilt movements have been performed.

According to the invention, at **612,** the controller **104** calculates one or more delta-rotorcraft state data (a deviation in three-dimensional space, for example, delta-latitude and delta-longitude, delta-attitude, delta altitude, etc.). At 612, the controller 104 may also calculate a delta-orientation and a delta-range. When a delta-latitude, delta-longitude, delta attitude, or the like, are calculated, they are compared to a respective predefined threshold. The predefined thresholds are selected to define stability of the rotorcraft. Therefore, according to the invention , if the controller **104** determines that the rotorcraft deviates in three-dimensional space more than a respective predefined threshold, the controller **104** will adjust pan and tilt commands to keep the beam axis on the selected pattern.

At **618** the PTZ camera **128** is slaved with the beam axis **30.** In other words, as the beam axis **30** moves around, the PTZ camera also reorients, such that a field of view of the PTZ camera **128** (not shown) is always centered around the beam axis **30.** At **620,** the PTZ camera **128** captures a video stream and transmits it. At **622,** the display system **110** may receive the video stream and display it for a user to observe in real time. At **622,** the display system **110** may adjust a zoom value of the PTZ camera responsive to a delta-range. After **624,** the method may return to **604** or end.

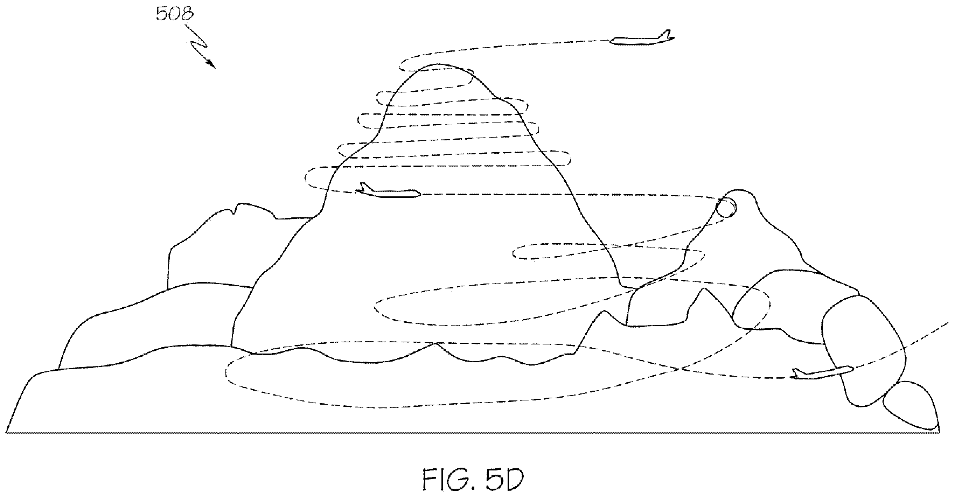

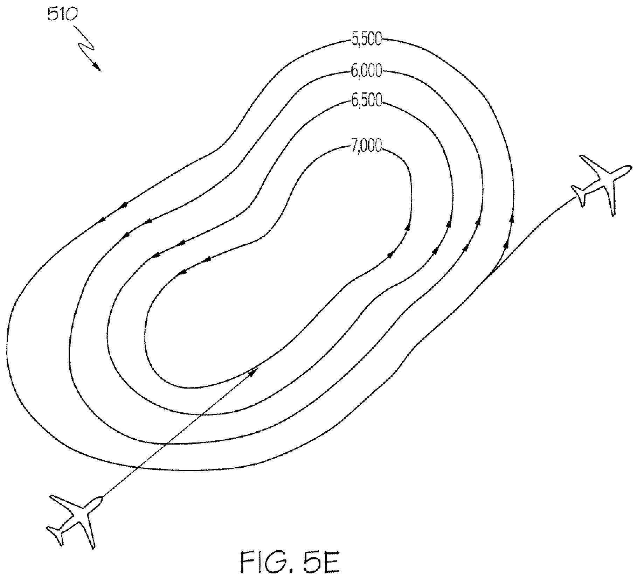

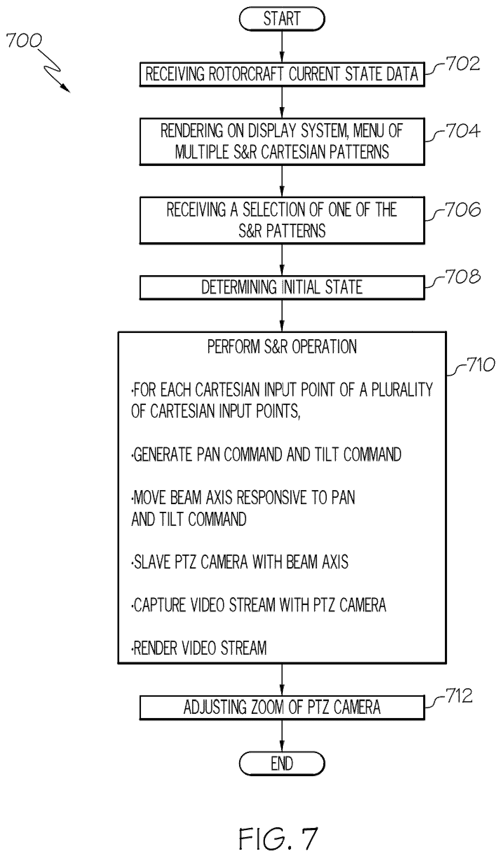

As mentioned, the source of a cartesian pattern **108** can provide, in bulk, a plurality of sequential discrete cartesian input points constituting a complete cartesian pattern, such as one of the search and rescue patterns described in connection with FIG. 5. In these embodiments, a method such as method **700** of FIG. 7 might be utilized. At the start of method **700,** it is assumed that the method is initialized and that the light head **122** is configured to generate a beam of light along the beam axis **30,** as described. At **702,** the rotorcraft current state data is received. At **704,** a menu of multiple different available SAR cartesian patterns is rendered on the display system **110.** At **706,** the method receives a user selected SAR cartesian pattern from among the multiple available SAR patterns.

At **708,** the initial states are determined as previously described. At **710,** the method begins performing a SAR operation in accordance with the selected SAR pattern. In other words, at **710,** for each cartesian input point of a plurality of cartesian input points constituting the selected SAR pattern, the method sequentially generates a pan command and a tilt command, moves the beam axis as described above, and slaves the PTZ camera **128.** The PTZ camera **128** captures a video stream and the video stream is rendered on the display system **110.** It is significant to note that the performance of the complete SAR pattern, from the first point in the pattern to the last point in the pattern, at **710,** happens automatically and without manual input, thus enabling the pilot to view captured video images or attend to other tasks. At **712,** the display system **110** may adjust a zoom value of the PTZ camera responsive to a delta-range. At the end of the SAR operation at **712,** the method may end or repeat.

Thus, the proposed systems and methods for SAR light control for a rotorcraft are technologically improved over conventional approaches to SAR systems for a rotorcraft. The system for SAR light control for a rotorcraft **102** enables easy augmentation for any rotorcraft equipped with a smart searchlight and does not require any special or additional instrumentation and equipage. As is readily appreciated, the above examples of the system **102** are non-limiting, and many others may be addressed by the SAR controller **104.**

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate the interchangeability of hardware and software, various illustrative components, blocks, modules, circuits, and steps have been described above generally in terms of their functionality. Whether such functionality is implemented as hardware or software depends upon the application and design constraints imposed on the overall system.

Skilled artisans may implement the described functionality in varying ways for each application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

Further, the various illustrative logical blocks, modules, and circuits described in connection with the embodiments disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of the method or algorithm described in connection with the embodiments disclosed herein may be embodied directly in hardware, in a software module executed by a controller or processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. When "or" is used herein, it is the logical or mathematical or, also called the "inclusive or." Accordingly, A or B is true for the three cases: A is true, B is true, and, A and B are true. In some cases, the exclusive "or" is constructed with "and;" for example, "one from A and B" is true for the two cases: A is true, and B is true.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

## Claims

1. A system to control a search and rescue, SAR, light on a rotorcraft, the SAR light configured to project a beam of light along a beam axis, the system comprising:
a pan control motor configured to cause the beam axis to pan responsive to a pan command;
a tilt control motor configured to cause the beam axis to tilt responsive to a tilt command;
a navigation system providing a real-time rotorcraft state, including a latitude, a longitude, and an orientation;
a source of a cartesian pattern configured to supply a plurality of cartesian input points in a sequence defining the cartesian pattern;
a controller operationally coupled to the navigation system and the source of a cartesian pattern, the controller having a processor programmed to:
receive the plurality of cartesian input points;
determine an initial light head orientation as a function of the real-time rotorcraft state;
generate pan commands and tilt commands as a function of the initial light head orientation and the plurality of cartesian input points in the sequence defining the cartesian pattern; and
transmit the pan commands to the pan control motor and the tilt commands to the tilt control motor,
wherein the controller is further configured to calculate one or more delta-rotorcraft state data and to compare the delta-rotorcraft state data to predefined thresholds defining a stability of the rotorcraft and, when the delta-rotorcraft state data exceeds the predefined thresholds, the controller is configured to adjust the pan and tilt commands to keep the beam axis on the cartesian pattern.

2. The system of Claim 1, further comprising a pan-tilt-zoom, PTZ, camera configured to slave with the beam axis and to continuously have a field of view centered on the beam axis, the PTZ camera configured to capture a video stream and transmit it.

3. The system of Claim 2, wherein the processor is further programmed to:
for each cartesian input point in the plurality of cartesian input points in the sequence defining the cartesian pattern, identify a delta-range, the delta range being a measure of how to change a distance (34) from the initial light head orientation toward the one of the plurality of cartesian input points in the sequence defining the cartesian pattern;
generate a respective pan command and a respective tilt command;
zoom in on the field of view of the PTZ camera when the delta-range is positive; and
zoom out on the field of view of the PTZ camera when the delta-range is negative.

4. The system of any preceding claim, wherein the controller is configured to command a display system (110) to render a menu of multiple different available SAR cartesian patterns, wherein the source of the cartesian pattern is a user-selected one of the multiple different available SAR cartesian patterns.

5. The system of any preceding claim, further comprising a display system configured to receive the video stream from the PTZ camera and render the video stream for observation by a user on a display device (20).

6. The system of any preceding claim, wherein generating the pan commands and the tilt commands includes generating elevations and azimuths with respect to the earth.

7. The system of any preceding claim, wherein the delta-rotorcraft state data comprises a deviation in three-dimensional space.

8. The system of Claim 7, wherein the deviation in three-dimensional space comprises delta-latitude and delta-longitude, delta attitude and delta altitude.

9. A method for controlling a Search and Rescue, SAR, light on a rotorcraft, the SAR light configured to project a beam of light along a beam axis, the method comprising:
at a controller having a processor programmed with a SAR program, performing the operations of:
receiving real-time rotorcraft state data;
receiving a cartesian input point;
determining an initial light head orientation as a function of the real-time rotorcraft state;
calculating a delta-orientation for the SAR light;
generating a pan command and a tilt command as a function of delta-orientation for the SAR light; and
transmitting the pan command and the tilt command;
at a pan control motor, causing the SAR light to pan responsive to the pan command;
at a tilt control motor, causing the SAR light to tilt responsive to the tilt command;
calculating one or more delta-rotorcraft state data and comparing the delta-rotorcraft state data to predefined thresholds defining a stability of the rotorcraft and, when the delta-rotorcraft state data exceeds the predefined thresholds, adjusting the pan and tilt commands to keep the beam axis on the cartesian input point.

10. The method of Claim 9, further comprising, at a pan-tilt-zoom, PTZ, camera configured to slave with the beam axis and to continuously have a field of view centered on the beam axis, capture a video stream and transmit it.

11. The method of Claim 10, wherein the cartesian input point is a one of a plurality of cartesian input points in a sequence defining the cartesian pattern, and wherein the processor is further programmed to perform the operations of:
for each cartesian input point in the sequence defining the cartesian pattern,
identifying a delta-range;
generating a respective pan command and a respective tilt command;
zooming in on the field of view of the PTZ camera when the delta-range is positive; and
zooming out on the field of view of the PTZ camera when the delta-range is negative.

12. The method of Claim 10 or 11, wherein generating the pan command and the tilt command includes generating an elevation and an azimuth with respect to the earth.

13. The method of Claim 10, 11 or 12, further comprising:
at a display system,
receiving the video stream; and displaying it.

14. The method of any of Claims 10 to 13, further comprising, receiving the cartesian pattern from a manual input device.

## Patentansprüche

1. System, um ein Such- und Rettungs-, SAR-, Licht an einem Hubschrauber zu steuern, wobei das SAR-Licht dazu konfiguriert ist, einen Lichtstrahl entlang einer Strahlachse zu projizieren, das System umfassend:
einen Schwenksteuermotor, der dazu konfiguriert ist, zu veranlassen, dass die Strahlachse als Antwort auf einen Schwenkbefehl schwenkt;
einen Neigesteuermotor, der dazu konfiguriert ist, zu veranlassen, dass sich die Strahlachse als Antwort auf einen Neigebefehl neigt;
ein Navigationssystem, das einen Echtzeit-Hubschrauberzustand bereitstellt, der einen Breitengrad, einen Längengrad und eine Ausrichtung beinhaltet;
eine Quelle eines kartesischen Musters, die dazu konfiguriert ist, eine Vielzahl von kartesischen Eingabepunkten in einer Sequenz, die das kartesische Muster definiert, anzubieten;
eine Steuereinheit, die betriebsfähig mit dem Navigationssystem und der Quelle eines kartesischen Musters gekoppelt ist, wobei die Steuereinheit einen Prozessor aufweist, der dazu programmiert ist:
die Vielzahl von kartesischen Eingabepunkten zu empfangen;
eine Lichtkopf-Anfangsausrichtung als eine Funktion des Echtzeit-Hubschrauberzustands zu bestimmen;
Schwenkbefehle und Neigebefehle als eine Funktion der Lichtkopf-Anfangsausrichtung und der Vielzahl von kartesischen Eingabepunkten in der Sequenz, die das kartesische Muster definiert, zu erzeugen; und
die Schwenkbefehle an den Schwenksteuermotor und die Neigebefehle an den Neigesteuermotor zu übertragen,
wobei die Steuereinheit ferner dazu konfiguriert ist, ein oder mehrere Delta-Hubschrauberzustandsdaten zu berechnen und die Delta-Hubschrauberzustandsdaten mit vordefinierten Schwellenwerten zu vergleichen, die eine Stabilität des Hubschraubers definieren, und, wenn die Delta-Hubschrauberzustandsdaten die vordefinierten Schwellenwerte überschreiten, die Steuereinheit dazu konfiguriert ist, die Schwenk- und Neigebefehle anzupassen, um die Strahlachse an dem kartesischen Muster zu halten.

2. System nach Anspruch 1, ferner umfassend eine Schwenk-Neige-Zoom-, PTZ-, Kamera, die dazu konfiguriert ist, sich an die Strahlachse anzugleichen und kontinuierlich ein Sichtfeld aufzuweisen, das auf die Strahlachse zentriert ist, wobei die PTZ-Kamera dazu konfiguriert ist, einen Videostrom zu erfassen und zu übertragen.

3. System nach Anspruch 2, wobei der Prozessor ferner dazu programmiert ist:
für jeden kartesischen Eingabepunkt in der Vielzahl von kartesischen Eingabepunkten in der Sequenz, die das kartesische Muster definiert, einen Delta-Bereich zu identifizieren, wobei der Delta-Bereich ein Maß dafür ist, wie eine Strecke (34) von der Lichtkopf-Anfangsausrichtung hin zu dem einen der Vielzahl von kartesischen Eingabepunkten in der Sequenz, die das kartesische Muster definiert, verändert werden soll;
einen jeweiligen Schwenkbefehl und einen jeweiligen Neigebefehl zu erzeugen;
an das Sichtfeld der PTZ-Kamera heranzuzoomen, wenn der Delta-Bereich positiv ist; und
das Sichtfeld der PTZ-Kamera wegzuzoomen, wenn der Delta-Bereich negativ ist.

4. System nach einem der vorhergehenden Ansprüche, wobei die Steuereinheit dazu konfiguriert ist, einem Anzeigesystem (110) zu befehlen, ein Menü von verschiedenen unterschiedlichen verfügbaren kartesischen SAR-Mustern wiederzugeben, wobei die Quelle des kartesischen Musters ein Benutzer-ausgewähltes der verschiedenen unterschiedlichen verfügbaren kartesischen SAR-Muster ist.

5. System nach einem der vorhergehenden Ansprüche, ferner umfassend ein Anzeigesystem, das dazu konfiguriert ist, den Videostrom von der PTZ-Kamera zu empfangen und den Videostrom zur Beobachtung durch einen Benutzer auf einer Anzeigevorrichtung (20) wiederzugeben.

6. System nach einem der vorhergehenden Ansprüche, wobei das Erzeugen der Schwenkbefehle und der Neigebefehle das Erzeugen von Höhen und Azimuten in Bezug auf die Erde beinhaltet.

7. System nach einem der vorhergehenden Ansprüche, wobei die Delta-Hubschrauberzustandsdaten eine Abweichung im dreidimensionalen Raum umfassen.

8. System nach Anspruch 7, wobei die Abweichung im dreidimensionalen Raum einen Delta-Breitengrad und einen Delta-Längengrad, eine Delta-Lage und eine Delta-Höhe umfasst.

9. Verfahren zum Steuern eines Such- und Rettungs-, SAR-, Lichts an einem Hubschrauber, wobei das SAR-Licht dazu konfiguriert ist, einen Lichtstrahl entlang einer Strahlachse zu projizieren, das Verfahren umfassend:
an einer Steuereinheit, die einen Prozessor aufweist, der mit einem SAR-Programm programmiert ist, Ausführen der folgenden Abläufe:
Empfangen von Echtzeit-Hubschrauberzustandsdaten;
Empfangen eines kartesischen Eingabepunkts;
Bestimmen einer Lichtkopf-Anfangsausrichtung als eine Funktion des Echtzeit-Hubschrauberzustands;
Berechnen einer Delta-Ausrichtung für das SAR-Licht;
Erzeugen eines Schwenkbefehls und eines Neigebefehls als eine Funktion einer Delta-Ausrichtung für das SAR-Licht; und
Übertragen des Schwenkbefehls und des Neigebefehls;
an einem Schwenksteuermotor, Veranlassen, dass das SAR-Licht als Antwort auf einen Schwenkbefehl schwenkt;
an einem Neigesteuermotor, Veranlassen, dass sich das SAR-Licht als Antwort auf einen Neigebefehl neigt;
Berechnen eines oder mehrerer Delta-Hubschrauberzustandsdaten und Vergleichen der Delta-Hubschrauberzustandsdaten mit vordefinierten Schwellenwerten, die eine Stabilität des Hubschraubers definieren, und, wenn die Delta-Hubschrauberzustandsdaten die vordefinierten Schwellenwerte überschreiten, Anpassen der Schwenk- und Neigebefehle, um die Strahlachse an dem kartesischen Eingabepunkt zu halten.

10. Verfahren nach Anspruch 9, ferner umfassend an einer Schwenk-Neige-Zoom-, PTZ-, Kamera, die dazu konfiguriert ist, sich an die Strahlachse anzugleichen und kontinuierlich ein Sichtfeld aufzuweisen, das auf die Strahlachse zentriert ist, Erfassen eines Videostroms und Übertragen des Videostroms.

11. Verfahren nach Anspruch 10, wobei der kartesische Eingabepunkt einer von einer Vielzahl von kartesischen Eingabepunkten in einer Sequenz ist, die ein kartesisches Muster definiert, und wobei der Prozessor ferner dazu programmiert ist, die folgenden Abläufe auszuführen:
für jeden kartesischen Eingabepunkt in der Sequenz, Definieren des kartesischen Musters,
Identifizieren eines Delta-Bereichs;
Erzeugen eines jeweiligen Schwenkbefehls und eines jeweiligen Neigebefehls; Heranzoomen an das Sichtfeld der PTZ-Kamera, wenn der Delta-Bereich positiv ist; und
Wegzoomen des Sichtfelds der PTZ-Kamera, wenn der Delta-Bereich negativ ist.

12. Verfahren nach Anspruch 10 oder 11, wobei das Erzeugen des Schwenkbefehls und des Neigebefehls das Erzeugen einer Höhe und eines Azimuts in Bezug auf die Erde beinhaltet.

13. Verfahren nach Anspruch 10, 11 oder 12, ferner umfassend:
an einem Anzeigesystem,
Empfangen des Videostroms; und Anzeigen des Videostroms.

14. Verfahren nach Anspruch 10 bis 13, ferner umfassend Empfangen des kartesischen Musters von einer manuellen Eingabevorrichtung.

## Revendications

1. Système de commande d'un projecteur de recherche et sauvetage, SAR, sur un aéronef à voilure tournante, le projecteur SAR étant configuré pour projeter un faisceau de lumière selon un axe de faisceau, le système comprenant :
un moteur de commande de panoramique configuré pour amener l'axe de faisceau à réaliser un panoramique en réponse à une commande de panoramique ;
un moteur de commande d'inclinaison configuré pour amener l'axe de faisceau à s'incliner en réponse à une commande d'inclinaison ;
un système de navigation mettant à disposition un état en temps réel de l'aéronef à voilure tournante, incluant une latitude, une longitude et une orientation ;
une source d'un motif cartésien configurée pour alimenter une pluralité de points d'entrée cartésiens selon une séquence définissant le motif cartésien ;
un contrôleur couplé fonctionnellement au système de navigation et à la source d'un motif cartésien, le contrôleur présentant un processeur programmé pour :
recevoir la pluralité de points d'entrée cartésiens ;
déterminer une orientation initiale de la tête du projecteur en fonction de l'état en temps réel de l'aéronef à voilure tournante ;
générer des commandes de panoramique et des commandes d'inclinaison en fonction de l'orientation initiale de la tête du projecteur et de la pluralité de points d'entrée cartésiens selon la séquence définissant le motif cartésien ; et
transmettre les commandes de panoramique au moteur de commande de panoramique et les commandes d'inclinaison au moteur de commande d'inclinaison,
dans lequel le contrôleur est en outre configuré pour calculer une ou plusieurs données d'écart d'état d'aéronef à voilure tournante et pour comparer les données d'écart d'état d'aéronef à voilure tournante à des seuils prédéfinis définissant une stabilité de l'aéronef à voilure tournante et, lorsque les données d'écart d'état d'aéronef à voilure tournante dépassent les seuils prédéfinis, le contrôleur est configuré pour ajuster les commandes de panoramique et d'inclinaison pour maintenir l'axe de faisceau sur le motif cartésien.

2. Système selon la revendication 1, comprenant en outre une caméra à panoramique-inclinaison-zoom, PTZ, configurée pour être asservie à l'axe de faisceau et pour présenter en permanence un champ de vision centré sur l'axe de faisceau, la caméra PTZ étant configurée pour capturer un flux vidéo et le transmettre.

3. Système selon la revendication 2, dans lequel le processeur est en outre programmé pour :
pour chaque point d'entrée cartésien de la pluralité de points d'entrée cartésiens dans la séquence définissant le motif cartésien, identifier un écart de portée, l'écart de portée étant une mesure de la manière de modifier une distance (34) à partir de l'orientation initiale de la tête du projecteur vers l'un de la pluralité de points d'entrée cartésiens dans la séquence définissant le motif cartésien ;
générer une commande de panoramique respective et une commande d'inclinaison respective ;
réaliser un zoom avant sur le champ de vision de la caméra PTZ lorsque l'écart de portée est positif ; et
réaliser un zoom arrière sur le champ de vision de la caméra PTZ lorsque l'écart de portée est négatif.

4. Système selon une quelconque revendication précédente, dans lequel le contrôleur est configuré pour commander un système d'affichage (110) pour qu'il restitue un menu de plusieurs différents motifs cartésiens SAR disponibles, dans lequel la source du motif cartésien est un motif sélectionné par l'utilisateur parmi les plusieurs différents motifs cartésiens SAR disponibles.

5. Système selon une quelconque revendication précédente, comprenant en outre un système d'affichage configuré pour recevoir le flux vidéo à partir de la caméra PTZ et restituer le flux vidéo pour une observation par un utilisateur sur un dispositif d'affichage (20).

6. Système selon une quelconque revendication précédente, dans lequel la génération des commandes de panoramique et des commandes d'inclinaison inclut la génération d'élévations et d'azimuts par rapport à la Terre.

7. Système selon une quelconque revendication précédente, dans lequel les données d'écart d'état d'aéronef à voilure tournante comprennent un écart dans l'espace tridimensionnel.

8. Système selon la revendication 7, dans lequel l'écart dans l'espace tridimensionnel comprend l'écart de latitude et l'écart de longitude, l'écart d'assiette et l'écart d'altitude.

9. Procédé de commande d'un projecteur de recherche et sauvetage, SAR, sur un aéronef à voilure tournante, le projecteur SAR étant configuré pour projeter un faisceau de lumière selon un axe de faisceau, le procédé comprenant :
au niveau d'un contrôleur présentant un processeur programmé avec un programme SAR, la mise en œuvre des opérations suivantes :
la réception de données d'état en temps réel de l'aéronef à voilure tournante ;
la réception d'un point d'entrée cartésien ;
la détermination d'une orientation initiale de la tête du projecteur en fonction de l'état en temps réel de l'aéronef à voilure tournante ;
le calcul d'un écart d'orientation pour le projecteur SAR ;
la génération d'une commande de panoramique et d'une commande d'inclinaison en fonction de l'écart d'orientation pour le projecteur SAR ; et
la transmission de la commande de panoramique et de la commande d'inclinaison ;
au niveau d'un moteur de commande de panoramique, l'action consistant à amener le projecteur SAR à réaliser un panoramique en réponse à la commande de panoramique ;
au niveau d'un moteur de commande d'inclinaison, l'action consistant à amener le projecteur SAR à réaliser une inclinaison en réponse à la commande d'inclinaison ;
le calcul d'une ou plusieurs données d'écart d'état d'aéronef à voilure tournante et la comparaison des données d'écart d'état d'aéronef à voilure tournante à des seuils prédéfinis définissant une stabilité de l'aéronef à voilure tournante et, lorsque les données d'écart d'état d'aéronef à voilure tournante dépassent les seuils prédéfinis, l'ajustement des commandes de panoramique et d'inclinaison pour maintenir l'axe de faisceau sur le point d'entrée cartésien.

10. Procédé selon la revendication 9, comprenant en outre, au niveau d'une caméra à panoramique-inclinaison-zoom, PTZ, configurée pour être asservie à l'axe de faisceau et pour présenter en permanence un champ de vision centré sur l'axe de faisceau, la capture d'un flux vidéo et sa transmission.

11. Procédé selon la revendication 10, dans lequel le point d'entrée cartésien est l'un d'une pluralité de points d'entrée cartésiens selon une séquence définissant le motif cartésien, et dans lequel le processeur est en outre programmé pour mettre en œuvre les opérations suivantes :
pour chaque point d'entrée cartésien dans la séquence définissant le motif cartésien,
l'identification d'un écart de portée ;
la génération d'une commande de panoramique respective et d'une commande d'inclinaison respective ;
la réalisation d'un zoom avant sur le champ de vision de la caméra PTZ lorsque l'écart de portée est positif ; et
la réalisation d'un zoom arrière sur le champ de vision de la caméra PTZ lorsque l'écart de portée est négatif.

12. Procédé selon la revendication 10 ou 11, dans lequel la génération de la commande de panoramique et de la commande d'inclinaison inclut la génération d'une élévation et d'un azimut par rapport à la Terre.

13. Procédé selon la revendication 10, 11 ou 12, comprenant en outre :
au niveau d'un système d'affichage,
la réception du flux vidéo ; et son affichage.

14. Procédé selon l'une quelconque des revendications 10 à 13, comprenant en outre la réception du motif cartésien à partir d'un dispositif d'entrée manuel.
